# EUROPÄISCHE PATENTSCHRIFT

(11) **EP 3 644 705 B1**
(45) Veröffentlichungstag und Bekanntmachung des Hinweises auf die Patenterteilung: **07.07.2021**
(21) Anmeldenummer: 18728607.5
(22) Anmeldetag: 30.05.2018
(51) Int. Cl.: A01D 43/08, A01D 75/20

(54) **FÖRDERSYSTEM ZUR FÖRDERUNG VON LANDWIRTSCHAFTLICHEM GUT UND VERFAHREN ZUR ANSTEUERUNG DES FÖRDERSYSTEMS**
CONVEYING SYSTEM FOR CONVEYING AGRICULTURAL PRODUCE OR MATERIAL AND METHOD FOR CONTROLLING SAID CONVEYING SYSTEM
SYSTÈME DE TRANSPORT POUR LE TRANSPORT DE PRODUITS AGRICOLES ET PROCÉDÉ DE COMMANDE DU SYSTÈME DE TRANSPORT

(30) Priorität: 28.06.2017 DE 102017210852
(43) Veröffentlichungstag der Anmeldung: 06.05.2020
(73) Patentinhaber: Robert Bosch GmbH, 70442 Stuttgart (DE)
(72) Erfinder: NOLTE, Philipp, 70839 Gerlingen (DE); SCHULZ, Udo, 71665 Vaihingen/Enz (DE)
(86) Internationale Anmeldenummer: PCT/EP2018/064157
(87) Internationale Veröffentlichungsnummer: WO 2019/001885

(56) Entgegenhaltungen:
- WO-A1-00/70942
- CH-A2- 701 808
- DE-A1- 10 258 347
- DE-A1-102012 003 987
- NL-C1- 1 003 948
- US-A1- 2013 059 631

## Beschreibung

### Stand der Technik

Die Erfindung betrifft ein Fördersystem zur Förderung von landwirtschaftlichem Gut und ein Verfahren zur Ansteuerung des Fördersystems. Gegenstand der vorliegenden Erfindung ist auch ein Computerprogramm.

Zum Schutz von Wildtieren vor dem sogenannten Mähtod und zum Verhindern einer Verunreinigung von Erntegut werden bekannterweise Feldbegehungen und Vergrämungen durchgeführt. Alternativ oder ergänzend werden elektronische Suchgeräte wie Infrarot-, Mikrowellen-, Radar-, Ultraschall- oder optische Sensoren zur Detektion von Wildtieren auf einer landwirtschaftlichen Nutzfläche verwendet.

Tierkadaver, insbesondere Teile von Tierkadavern in einem fortgeschrittenen Stadium der Verwesung beziehungsweise Fäulnis, besitzen Umgebungstemperatur und sind oftmals unförmig, was eine Detektion erschwert. Gelangt ein Tierkadaver in ein Fördersystem zur Förderung von landwirtschaftlichem Gut, kann zum einen das Fördersystem beschädigt werden. Zum anderen wird das mit dem Tierkadaver oder tierischen Exkrementen kontaminierte Erntegut unbrauchbar. Insbesondere Hundekot enthält bestimmte Parasiten, die für mit dem Erntegut gefütterte Nutztiere lebensbedrohlich sein können. Zudem verweigern die Nutztiere oftmals bereits in geringen Konzentrationen kontaminiertes Erntegut als Futter.

### Beschreibung (Reinfassung)

Aus der DE 10 2011 053 214 ist eine landwirtschaftliche Erntemaschine mit zumindest einem Arbeitsaggregat zur Bearbeitung und Förderung von Erntegut bekannt, wobei die Erntemaschine eine Sensoranordnung aufweist, die im bearbeiteten Erntegut enthaltene Gefahrenstoffe erkennt.

Die US 2013/059631 A1 offenbart ein mobiles Fördersystem mit einer Erkennungseinheit, die ausgebildet ist, ein Gefahrenobjekt anhand eines von dem Gefahrenobjekt abgegebenen Lichtspektrums zu erkennen.

Die DE 102 58 347 A1 offenbart eine Einrichtung zur Detektion von Objekten, wie Vogelgelegen und Tieren im Acker- und Pflanzenbau, umfassend eine Infrarotsensoranordnu ng.

### Offenbarung der Erfindung

Gegenstand der vorliegenden Erfindung ist ein mobiles Fördersystem zur Förderung von landwirtschaftlichem Gut mit einer Erkennungseinheit, wobei die Erkennungseinheit ausgebildet ist, ein Gefahrenobjekt anhand eines von dem Gefahrenobjekt abgegebenen Gases zu erkennen, um eine Kontamination des geförderten landwirtschaftlichen Gutes mit dem Gefahrenobjekt zu verhindern.

Gegenstand der vorliegenden Erfindung ist weiterhin ein Verfahren zur Ansteuerung eines mobilen Fördersystems zur Förderung von landwirtschaftlichem Gut. Ferner ist Gegenstand der vorliegenden Erfindung ein Computerprogramm und ein maschinenlesbares Speichermedium.

Unter einem Fördersystem kann im Rahmen der vorliegenden Erfindung ein System verstanden werden, das ausgebildet ist, landwirtschaftliches Gut zu fördern. Unter einem mobilen Fördersystem kann im Rahmen der vorliegenden Erfindung ein Fördersystem verstanden werden, das an einem Fortbewegungsmittel anordenbar oder selbstfahrend ist. Bei dem Fördersystem kann es sich um eine Fördereinheit wie beispielsweise ein Schneidwerk, ein Schrägförderer, ein Dreschaggregat, ein Abscheidesystem, ein Reinigungssieb, ein Getreidetank oder ein Abtankrohr eines Mähdreschers handeln. Denkbar ist auch, dass die Fördereinheit eine Aufnahme- oder Einzugsvorrichtung, ein Häckselwerk oder ein Auswurfturm eines Feldhäckslers ist. Alternativ kann es sich bei dem Fördersystem um eine landwirtschaftliche Arbeitsmaschine wie zum Beispiel einen Mähdrescher, einen Feldhäcksler oder eine Ballenpresse handeln. Bei dieser Ausgestaltung ist an dem Fördersystem die Fördereinheit zur Förderung von landwirtschaftlichem Gut angeordnet.

Unter einem landwirtschaftlichen Gut kann im Rahmen der vorliegenden Erfindung ein Erntegut oder Mähgut verstanden werden. Bei dem landwirtschaftlichen Gut kann es sich beispielsweise um Getreide, Feldfrüchte, Gras beziehungsweise Heu oder Stroh handeln.

Unter einer Erkennungseinheit kann im Rahmen der vorliegenden Erfindung eine Einheit verstanden werden, die ausgebildet ist, ein Gefahrenobjekt anhand eines von dem Gefahrenobjekt abgegebenen Gases zu erkennen. Die Erkennungseinheit weist zumindest ein Sensorelement auf, mittels dessen das Gas detektierbar ist. Die Erkennungseinheit kann an dem mobilen Fördersystem angeordnet sein. Denkbar ist, dass die Erkennungseinheit an der Fördereinheit angeordnet ist. Denkbar ist auch, dass die Erkennungseinheit an einer mit dem mobilen Fördersystem nicht mechanisch verbundenen Vorrichtung wie einem mobilen Roboter oder einer Drohne angeordnet ist.

Unter einem Gefahrenobjekt kann im Rahmen der vorliegenden Erfindung ein Objekt verstanden werden, das ausgebildet ist, eine Gefahr für ein Lebewesen, beispielsweise einen Menschen oder ein Tier, bei Verwendung beziehungsweise Verzehr des geförderten landwirtschaftlichen Guts darzustellen. Das heißt, mit anderen Worten, dass das Gefahrenobjekt ausgebildet ist, das geförderte landwirtschaftliche Gut zu kontaminieren. Das Gefahrenobjekt kann organische Bestandteile aufweisen oder aus organischen Bestandteilen bestehen. Die organischen Bestandteile können teilweise oder vollständig verwest oder verfault sein. Besonders vorteilhaft für eine Erkennung des Gefahrenobjekts mittels der Erkennungseinheit ist es, wenn das Gefahrenobjekt zumindest ein Teil eines Kadavers und/oder eines Exkrements ist. Kadaver und Exkremente, insbesondere Exkremente von Wild- oder Haustieren, sind dazu ausgebildet, das geförderte landwirtschaftliche Gut derart zu kontaminieren, dass das Gut beispielsweise zur Verfütterung an Tiere unbrauchbar wird. Das Gefahrengut ist vorteilhafterweise in einem zu fördernden oder in einem geförderten landwirtschaftlichen Gut angeordnet. Beispielsweise ist das Gefahrenobjekt auf einem Acker, in einem Getreidefeld oder auf einer Wiese angeordnet.

Das Gefahrenobjekt ist ausgebildet, ein Gas abzugeben. Von Vorteil ist es insbesondere, wenn es sich bei dem Gas um ein bei einer Verwesung und/oder einer Fäulnis und/oder einer Verdauung entstehendes Gas handelt.
Bei dem Gas kann es sich zum Beispiel um eine schweflige, geruchsbildende Substanz wie Schwefelwasserstoff, Dimethylsulfid, Dimethyldisulfid oder Methylmercaptan handeln. Denkbar ist auch, dass es sich bei dem Gas um Ammoniak oder ein sogenanntes Leichengift wie beispielsweise Cadaverin oder Putrescin handelt.

Durch das erfindungsgemäße Fördersystem und das erfindungsgemäße Verfahren ist es nunmehr möglich, bei einer Förderung von landwirtschaftlichem Gut Gefahrenobjekte zu erkennen, die aufgrund ihrer Größe, Form, Temperatur, räumlichen Position oder Verdeckung durch Pflanzen beispielsweise mittels optischer Verfahren nicht oder nicht schnell genug erkennbar sind. Mittels der erfindungsgemäßen Erkennung des Gefahrenobjekts anhand eines von dem Gefahrenobjekt abgegebenen Gases ist daher eine Kontamination des geförderten landwirtschaftlichen Gutes mit dem Gefahrenobjekt vermeidbar beziehungsweise eine Verunreinigung oder gar eine Beschädigung des Fördersystems durch das Gefahrenobjekt verhinderbar. Durch das erfindungsgemäße Fördersystem und das erfindungsgemäße Verfahren wird teuren Ausfallzeiten von landwirtschaftlichen Arbeitsmaschinen oder einem Ertragsausfall aufgrund des kontaminierten landwirtschaftlichen Gutes vorgebeugt sowie eine hohe Prozesssicherheit und Produktqualität bei der Förderung landwirtschaftlichen Gutes sichergestellt.

Vorteilhaft ist es, wenn die Erkennungseinheit ausgebildet ist, eine Konzentration und/oder eine chemischen Zusammensetzung des von dem Gefahrenobjekt abgegebenen Gases zu erkennen, um das Gefahrenobjekt zu identifizieren. Bei der chemischen Zusammensetzung des Gases kann es sich zum Beispiel um eine chemische Strukturformel für das Gas handeln. Denkbar ist, dass die Erkennungseinheit ausgebildet ist, verschiedene Gase in einem Gemisch von Gasen anhand der Erkennung der chemischen Zusammensetzung der einzelnen Gase voneinander zu unterscheiden. Denkbar ist weiterhin, dass die Erkennungseinheit ausgebildet ist, Konzentrationen der verschiedenen Gase in dem Gemisch von Gasen zu erkennen. Durch Kenntnis der Konzentration und der chemischen Zusammensetzung des von dem Gefahrenobjekt abgegebenen Gases kann das Gefahrenobjekt besonders präzise erkannt werden.

Auch ist es von Vorteil, wenn die Erkennungseinheit mindestens ein Gassensorelement aufweist, um das Gefahrenobjekt zu erkennen. Das Gassensorelement ist ein Sensorelement, das ausgebildet ist, ein Gas, insbesondere ein bei einer Verwesung oder einer Fäulnis oder einer Verdauung entstehendes Gas, zu detektieren. Denkbar ist, dass es sich bei dem Gassensorelement um ein Sensorelement auf Basis eines Metalloxids, das heißt um einen Metalloxidgassensor handelt. Das Metalloxid kann zum Beispiel Zinnoxid sein. Metalloxidgassensoren sind bei isothermem Betrieb, das heißt bei Betrieb mit konstanter Temperatur, empfindlich auf verschiedene Gase, inbesondere auf oxidierende oder reduzierende Gase.

Mittels einer Temperaturvariation beziehungsweise Temperaturmodulation des Sensorelements kann die Empfindlichkeit beziehungsweise die Genauigkeit des Metalloxidgassensors für schweflige Gase erhöht werden. Insbesondere kann mittels der Temperaturmodulation eine Unterscheidung zwischen schwefligen und nicht-schwefligen Gasen verbessert werden. Die Temperaturmodulation erfolgt mit einer definierten Periodendauer. Um eine zeitliche Auflösung bei der Detektion des Gefahrenobjekts mittels des Metalloxidgassensors zu erzielen, die besser beziehungsweise genauer ist als die Periodendauer der Temperaturmodulation, ist es denkbar, mehrere Metalloxidgassensoren zu verwenden. Die mehreren Metalloxidgassensoren können von gleicher Bauweise sein. Die mehreren Metalloxidgassensoren können mit derselben Temperaturmodulation betrieben werden, wobei die Temperaturmodulationen der einzelnen Metalloxidgassensoren einen zeitlichen Versatz zueinander aufweisen. Durch diese Ausgestaltung ist ein Array von mehreren Gassensorelementen auf Basis von Metalloxid mit zeitlich verschobenen Temperaturmodulationen ausgebildet, mehr Detektionsvorgänge pro Zeiteinheit auszuführen als ein einzelnes Gassensorelement. Dadurch wird die zeitliche Auflösung der Erkennungseinheit verbessert.

Auch kann es sich bei dem Gassensorelement um ein elektrochemisches Sensorelement handeln. Das elektrochemische Sensorelement erzeugt bei einer Anwesenheit eines bestimmten Gases einen elektrischen Strom beziehungsweise eine elektrische Spannung, die mittels eines geeigneten Messgeräts messbar ist.

Ferner kann es sich bei dem Gassensorelement um ein optisches Gassensorelement handeln, bei dem zum Beispiel die Transmission von Licht einer bestimmten Wellenlänge gemessen wird, die nach dem Lambert-Beer-Prinzip in Abhängigkeit von der Konzentration des Gases zu einer Abschwächung der Intensität führt.

Denkbar ist auch, dass die Erkennungseinheit ein Heizelement aufweist, mittels dessen ein schwefelhaltiges Gas in Schwefeldioxid oxidiert wird. Das erzeugte Schwefeldioxid kann dann mittels eines Gassensorelements detektiert werden, das empfindlich auf Schwefeldioxid ist. Bei dem Gassensorelement kann es sich um ein Gassensorelement auf Basis eines Metalloxids oder um ein elektrochemisches oder optisches Sensorelement handeln.
Mittels des Gassensorelements kann das von dem Gefahrenobjekt abgegebene Gas technisch einfach und zuverlässig erkannt werden.

Das Gassensorelement kann an dem Fördersystem oder an einer Fördereinheit des Fördersystems angeordnet sein. Vorteilhafterweise ist das Gassensorelement derart an dem Fördersystem angeordnet, dass das Gefahrenobjekt erkannt wird, bevor das Gefahrenobjekt das geförderte landwirtschaftliche Gut oder das Fördersystem beziehungsweise die Fördereinheit kontaminiert. Denkbar ist, dass das Gassensorelement mittels einer Trägerstruktur an einer in einer Fortbewegungsrichtung des Fördersystems vorderen Seite des Fördersystems angeordnet ist. Dadurch ist das Gefahrenobjekt zeitlich vor der Förderung des mit dem Gefahrenobjekt kontaminierten landwirtschaftlichen Gutes erkennbar. Denkbar ist auch, dass das Gassensorelement an einer Fördereinheit des Fördersystems, beispielsweise an einem Schneidwerk, einem Schrägförderer, einem Dreschaggregat, einem Abscheidesystem, einem Reinigungssieb, einem Getreidetank oder einem Abtankrohr eines Mähdreschers oder einer Aufnahme- oder Einzugsvorrichtung, eines Häckselwerks oder eines Auswurfturms eines Feldhäckslers angeordnet ist. Von Vorteil ist es, wenn bei der Anordnung des Gassensorelements an dem Fördersystem eine Verarbeitungszeit von Sensorsignalen des Gassensorelements und/oder einer Fördergeschwindigkeit des mittels des Fördersystems geförderten landwirtschaftlichen Gutes berücksichtigt wird. Dann kann ein sich bereits auf dem Fördersystem befindliches Gefahrenobjekt so rechtzeitig erkannt und entfernt werden, dass ein kompliziertes und zeitintensives Öffnen des Fördersystems zu einer Entfernung, Reinigung oder Reparatur des Fördersystems nicht notwendig ist. Kadaver, insbesondere Kadaver von Rehkitzen und größeren Tieren, sowie Skelette beziehungsweise Knochen sind ausgebildet, das Fördersystem mechanisch zu beschädigen. Wird das Gefahrenobjekt erkannt, bevor ein Teil des Gefahrenobjekts mit dem geförderten landwirtschaftlichem Gut in den Getreidetank gefördert wird, kann die Förderung rechtzeitig unterbrochen werden, um eine Kontamination des bereits in dem Getreidetank enthaltenen Guts zu verhindern. Bei einer Erkennung des Gefahrenobjekts mittels eines an einem Abtankrohr eines Mähdreschers oder an einem Auswurfturm eines Feldhäckslers angeordneten Gassensorelement kann zumindest eine Kontamination einer Überladevorrichtung wie beispielsweise eines Transportanhängers eines Traktors oder einer Speichervorrichtung für ein landwirtschaftliches Gut wie ein Silo verhindert werden.

Außerdem ist es vorteilhaft, wenn die Erkennungseinheit mindestens ein weiteres dem Gassensorelement räumlich beabstandetes Gassensorelement aufweist, um das von dem Gefahrenobjekt abgegebene Gas an zwei räumlich verschiedenen Positionen zu erfassen. Denkbar ist, dass das weitere Gassensorelement ebenfalls an einer Fördereinheit des Fördersystems angeordnet ist. Mittels eines oder mehrerer weiterer räumlich beabstandet angeordneter Gassensorelemente kann der Gefahrenstoff besonders zuverlässig erkannt und beispielsweise eine Unterbrechung des Förderung des landwirtschaftlichen Gutes aufgrund einer fehlerhaften Detektion des Gases verhindert werden.

Darüber hinaus ist es von Vorteil, wenn mittels des weiteren Gassensorelements ein Referenzwert eines Hintergrundgases messbar ist. Denkbar ist, dass in der von der Erkennungseinheit zur Erkennung des Gefahrenobjekts erfassten Luft Hintergrundgase enthalten sind. Bei den Hintergrundgasen handelt es sich um Gase, die nicht von dem Gefahrenobjekt abgegeben wurden, die in ihrer chemischen Zusammensetzung jedoch mit von dem Gefahrenobjekt abgegebenen Gasen identisch sein können. Die Hintergrundgase können zum Beispiel Schwefelwasserstoff oder Ammoniak sein. Diese Hintergrundgase werden beispielsweise von Gasquellen wie einer Biogasanlage oder einem gedüngten Boden abgegeben. Aufgrund einer im Vergleich zum Gefahrenobjekt räumlich größeren Entfernung der Gasquellen zum Fördersystem, ist die Konzentration der Hintergrundgase an den verschiedenen Fördereinheiten des Fördersystems nahezu gleich groß. Aufgrund einer im Vergleich zu den Gasquellen räumlich kleineren Entfernung des Gefahrenobjekts zum Fördersystem, ist die Konzentration des von dem Gefahrenobjekt abgegebenen Gases an den verschiedenen Fördereinheiten des Fördersystems unterschiedlich groß. Beispielsweise weist das von einem sich in Fortbewegungsrichtung des Fördersystems vor dem Fördersystem befindliches Gefahrenobjekt abgegebene Gas bei einem Gassensorelement an einem Schneidwerk des Fördersystems eine höhere Konzentration auf als an einem Abtankrohr des Fördersystems. Das heißt, mit anderen Worten, dass mittels der Verwendung mindestens zweier räumlich beabstandeter Gassensorelemente ein Referenzwert, insbesondere eine räumlich konstante Konzentration, von Hintergrundgasen erkennbar ist. Damit kann von den Werten der Sensorsignale der Gassensorelemente der konstante Beitrag des Referenzwertes der Hintergrundgase abgezogen werden. Dadurch kann das Gefahrenobjekt auch bei störenden äußeren Einflüssen wie einem Ausbringen von Gülle in einer räumlichen Nähe zum Fördersystem zuverlässig erkannt werden.

Vorteilhaft ist es des Weiteren, wenn das ein Strömungselement aufweist, mittels dessen ein von der Erkennungseinheit erfassbarer Volumenstrom des von dem Gefahrenobjekt abgegebenen Gases erhöht wird. Bei dem Strömungselement kann es sich zum Beispiel um einen Ventilator, einen Lüfter oder ein Gebläse handeln. Das Strömungselement kann an dem Fördersystem, insbesondere an einer Fördereinheit des Fördersystems, angeordnet sein. Das Strömungselement saugt vorteilhafterweise Luft aus einem entlang einer Fortbewegungsrichtung des Fördersystems dem Fördersystem räumlich vorgeordneten Bereich an. Die angesaugte Luft wird derart von dem Strömungselement abgegeben, dass der von der Erkennungseinheit erfassbare Volumenstrom der Luft und damit der Volumenstrom des in der Luft enthaltenen Gases erhöht werden. Denkbar ist, dass die von dem Strömungselement abgegebene Luft über ein Gassensorelement strömt. Durch diese Ausgestaltung können bereits sehr kleine Konzentrationen des Gases zuverlässig detektiert und Gefahrenobjekte in größerer Entfernung von dem Fördersystem erkannt werden.

Von Vorteil ist es ferner, wenn das Fördersystem ein zusätzliches optisches Sensorelement aufweist, um das Gefahrenobjekt zu erkennen. Bei dem optischen Sensorelement kann es sich um eine Kamera für den für ein menschliches Auge sichtbaren Wellenlängenbereich oder ein Spektralsensorelement für den nahinfraroten Wellenlängenbereich oder eine Hyperspektralkamera für den sichtbaren und/oder nahinfraroten Wellenlängenbereich handeln. Mittels Sensordatenfusion können die Sensordaten von dem Gassensorelement und dem optischen Sensorelement kombiniert werden, um das Gefahrenobjekt besonders zuverlässig zu erkennen.

Vorteilhaft ist es auch, wenn das Fördersystem eine Steuereinheit aufweist, die ausgebildet ist, das Fördersystem in Abhängigkeit von dem erkannten Gefahrenobjekt anzusteuern. Die Steuereinheit ist ausgebildet, das Fördersystem mittels Übertragen eines Steuersignals an das Fördersystem anzusteuern. Denkbar ist, dass bei Erkennen des Gefahrenobjekts eine Förderung des landwirtschaftlichen Gutes unterbrochen wird. Hierzu kann eine Fortbewegung des Fördersystems gestoppt werden. Alternativ oder zusätzlich kann zumindest die Fördereinheit oder ein Element der Fördereinheit des Fördersystems deaktiviert werden. Zum Beispiel kann bei einem Mähdrescher ein Schneidwerk angehoben oder ein Antrieb für einen Schrägförderer, eine Dreschtrommel oder einen Schüttler gestoppt werden. Denkbar ist auch, dass das Fördersystem eine Förderrichtung des geförderten landwirtschaftlichen Gutes umkehrt, um ein bereits gefördertes Gefahrenobjekt von dem Fördersystem zu entfernen. Ferner ist denkbar, dass das Fördersystem derart angesteuert wird, dass es von einer vordefinierter Fortbewegungsroute abweicht, um dem Gefahrenobjekt auszuweichen. Weiterhin ist denkbar, dass ein Bediener des Fördersystems eine visuelle, akustische oder haptische Warnung vor dem Gefahrenobjekt erhält. Die Warnung kann eine Information über eine Art des Gefahrenobjekts und eine räumliche Position des Gefahrenobjekts enthalten. Durch diese Ausgestaltung kann eine Kontamination des geförderten landwirtschaftlichen Gutes oder des Fördersystems verhindert beziehungsweise minimiert werden.

Vorteilhafterweise wird bei einer Erkennung eines Gefahrenobjekts eine räumliche Position des Fördersystems und/oder eine ermittelte räumliche Position des Gefahrenobjekts in einer Karte hinterlegt. Denkbar ist, dass eine Beseitigung des Gefahrenobjekts mittels der in der Karte hinterlegten Position des Gefahrenobjekts erfolgt. Die Beseitigung des Gefahrenobjekts kann beispielsweise von einer von dem Bediener des Fördersystems verschiedenen Person oder von einer von dem Fördersystem verschiedenen Vorrichtung durchgeführt werden. Durch diese Ausgestaltung können teure Standzeiten von mobilen Fördersystemen reduziert werden. Anhand der in der Karte hinterlegten räumlichen Positionen der Gefahrenobjekte sind Bereiche zu identifizieren, in denen sich viele Gefahrenobjekte oder in denen sich häufig Gefahrenobjekte befinden. Mittels Analyse der räumlichen Positionen der Gefahrenobjekte können räumliche Bereiche für prädiktive Maßnahmen wie Feldbegehungen oder Vergrämungen besonders gezielt ausgewählt werden.

### Zeichnungen

Die Erfindung wird nachstehend anhand der beigefügten Zeichnungen beispielhaft näher erläutert. Es zeigen:
- Fig. 1: eine schematische Darstellung eines Fördersystems zur Förderung von landwirtschaftlichem Gut;
- Fig. 2: eine schematische Darstellung eines landwirtschaftlichen Nutzfahrzeugs zur Förderung von landwirtschaftlichem Gut;
- Fig. 3: ein Ablaufdiagramm eines Verfahrens zur Ansteuerung eines mobilen Fördersystems zur Förderung von landwirtschaftlichem Gut

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

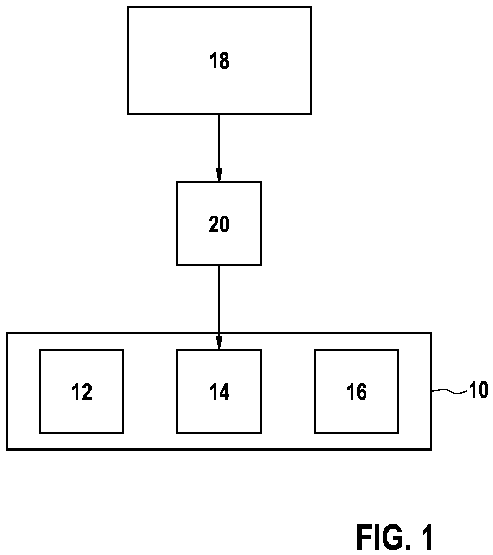

Fig. 1 zeigt eine schematische Darstellung eines Fördersystems zur Förderung von landwirtschaftlichem Gut. Das Fördersystem seiner Gesamtheit mit dem Bezugszeichen 10 versehen.

Das Fördersystem 10 weist eine Förderereinheit 12, eine Erkennungseinheit 14 und eine Steuereinheit 16 auf. Die Fördereinheit 12 ist ausgebildet, landwirtschaftliches Gut zu fördern. Die Erkennungseinheit 14 ist ausgebildet, ein von einem Gefahrenobjekt 18 abgegebenes Gas 20 zu detektieren. Die Steuereinheit 16 ist ausgebildet, das Fördersystem 10 in Abhängigkeit von dem erkannten Gefahrenobjektobjekt 18 anzusteuern.

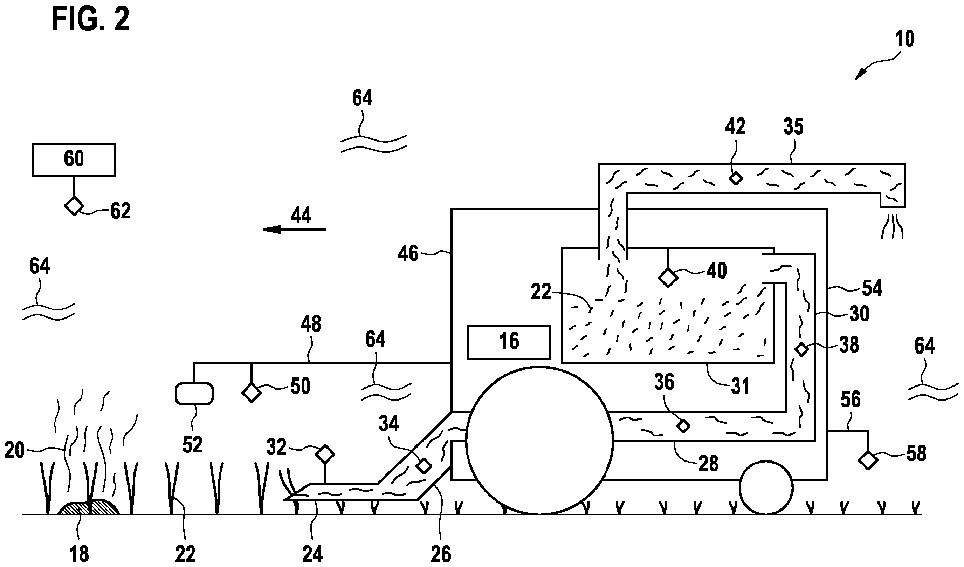

Fig. 2 zeigt eine schematische Darstellung eines als landwirtschaftliches Nutzfahrzeug 10 ausgebildeten Fördersystems 10 zur Förderung von landwirtschaftlichem Gut 22. Bei dem landwirtschaftlichen Nutzfahrzeug 10 handelt es sich zum Beispiel um einen Mähdrescher 10. Bei dem landwirtschaftlichen Gut 22 handelt es sich um Getreide 22.

Der Mähdrescher 10 weist mehrere Fördereinheiten 12 auf, mittels derer das Getreide 22 förderbar ist. Die Fördereinheiten 12 umfassen ein Schneidwerk 24, einen Schrägförderer 26, ein Abscheidesystem 28, ein Reinigungssieb 30, einen Korntank 31 und ein Abtankrohr 34.

Der Mähdrescher 10 weist eine Erkennungseinheit 14 mit mehreren Gassensorelementen 32, 34, 36, 38, 40, 42, 50, 58, 62 auf. Die Erkennungseinheit 14 ist ausgebildet mittels der Gassensorelemente 32, 34, 36, 38, 40, 42, 50, 62 ein Gefahrenobjekt 18 anhand eines von dem Gefahrenobjekt 18 abgegebenen Gases 20 zu erkennen. Bei dem Gefahrenobjekt 18 handelt es sich um einen Tierkadaver 18. Bei dem von dem Tierkadaver 18 abgegebenen Gas 20 handelt es sich um Schwefelwasserstoff 20.

Das Gassensorelement 32 ist an dem Schneidwerk 24 des Mähdreschers 10 angeordnet, um den Tierkadaver 18 in dem geförderten Getreide 22 bereits beim Schneiden des Getreides 22 zu erkennen. Das Gassensorelement 34 ist an dem Schrägförderer 26 des Mähdreschers 10 angeordnet. Das Gassensorelement 36 ist an dem Abscheidesystem 28 des Mähdreschers 10 angeordnet. Das Gassensorelement 38 ist an dem Reinigungssieb 30 des Mähdreschers 10 angeordnet. Die Gassensorelemente 32, 34, 36, 38 sind derart an dem Mähdrescher 10 angeordnet, dass der Tierkadaver 18 erkannt wird, bevor der Tierkadaver 18 in den Korntank 31 gefördert wird.

Das Gassensorelement 40 ist an dem Korntank 31 angeordnet, um den Tierkadaver 18 in dem geförderten Getreide 22 vor dem Abtanken mittels des Abtankrohrs 34 des geförderten Getreides 22 zu erkennen.

Das Gassensorelement 42 ist an dem Abtankrohr 34 des Mähdreschers 10 angeordnet, um eine Kontamination einer Überladevorrichtung wie beispielsweise eines Transportanhängers eines Traktors mit dem Tierkadaver 18 zu verhindern.

An einem in einer Fahrtrichtung 44 des Mähdreschers 10 vorderen Bereich 46 des Mähdreschers 10 weist der Mähdrescher 10 eine erste Trägerstruktur 48 auf. An der ersten Trägerstruktur 48 sind das Gassensorelement 50 und ein Gebläse 52 angeordnet. Das Gassensorelement 50 ist derart an der ersten Trägerstruktur 48 des Mähdreschers 10 angeordnet, dass mittels des Gassensorelements 50 der Tierkadaver 18 erkennbar ist, bevor der Tierkadaver 18 mittels des an dem Schneidwerk 24 angeordneten Gassensorelements 32 erkennbar ist. Das Gebläse 52 saugt Luft entgegen der Fahrtrichtung 44 des Mähdreschers 10 an. Die angesagte Luft wird von dem Gebläse 52 an das Gassensorelement 50 abgegeben, sodass sich der von dem Gassensorelement 50 erfassbare Volumenstrom der Luft beziehungsweise des in der Luft enthaltenen Gases 20 erhöht. Alternativ kann das Gebläse 52 in einer räumlichen Nähe zu einem anderen Gassensorelement 32, 34, 36, 38, 40, 42, 50, 62. Denkbar ist auch, dass in einer räumlichen Nähe von mehreren oder allen Gassensorelementen 32, 34, 36, 38, 40, 42, 50, 62 Gebläse 52 angeordnet sind.

Ferner ist der Mähdrescher 10 mittels einer nicht dargestellten Schnittstelle drahtlos mit einer Drohne 60 elektronisch gekoppelt. An der Drohne 60 ist das Gassensorelement 62 angeordnet. Die Drohne 60 fliegt in der Fahrtrichtung 44 des Mähdreschers 10 vor dem Mähdrescher 10. Durch diese Anordnung ist die Drohne 60 ausgebildet, mittels des Gassensorelements 62 den Tierkadaver 18 anhand des von dem Tierkadaver 18 abgegebenen Schwefelwasserstoffs 20 frühzeitig zu erkennen.

Mittels der Gassensorelemente 32, 34, 36, 38, 40, 42, 50, 62 kann der Tierkadaver 18 anhand des von dem Tierkadaver 18 abgegebenen Schwefelwasserstoffs 20 rechtzeitig und zuverlässig erkannt werden. Hierbei ist anhand der von den einzelnen Gassensorelements 32, 34, 36, 38, 40, 42, 50, 62 detektierten Konzentrationen des Schwefelwasserstoffs 20 eine räumliche Position des Tierkadavers 18 bestimmbar. Der Tierkadaver 18 ist dem Gassensorelement 32, 34, 36, 38, 40, 42, 50, 62 räumlich am nächsten, an dem die Konzentration des Schwefelwasserstoffs 20 am höchsten ist. Ferner ist eine Ansteuerung der Drohne 60 derart denkbar, dass eine räumliche Position der Drohne 60 variiert wird, um eine räumliche Position einer maximalen Konzentration von Schwefelwasserstoff 20 zu bestimmen.

Darüber hinaus ist an einem in Fahrtrichtung 44 des Mähdreschers 10 hinteren Bereich 54 des Mähdreschers 10 eine zweite Trägerstruktur 56 angeordnet. An der zweiten Trägerstruktur 56 ist das Gassensorelement 58 angeordnet. Das Gassensorelement 58 ist derart an der zweiten Trägerstruktur 56 angeordnet, dass mittels des Gassensorelements 58 der Tierkadaver 18 nicht erkennbar ist. Stattdessen ist mittels des Gassensorelements 58 ein Hintergrundgas 64 detektierbar. Bei dem Hintergrundgas 64 handelt es sich ebenfalls um Schwefelwasserstoff 64. Das Hintergrundgas 64 wird beispielsweise beim Ausbringen von Gülle in einer räumlichen Nähe zum Mähdrescher 10 abgegeben. Das Hintergrundgas 64 wird von allen Gassensorelementen 32, 34, 36, 38, 40, 42, 50, 58, 62 detektiert. Um den von dem Tierkadaver 18 abgegebenen Schwefelwasserstoff 20 von dem Hintergrundgas Schwefelwasserstoff 64 zu unterscheiden, kann eine mittels des Gassensorelements 58 bestimmte Konzentration des Schwefelwasserstoffs 64 von einer mittels des Gassensorelemente 32, 34, 36, 38, 40, 50, 62 bestimmten Konzentration des Schwefelwasserstoffs 20 abgezogen werden. Das heißt, mit anderen Worten, dass mittels des Gassensorelements 58 eine Referenzmessung durchführbar ist.

Die Steuereinheit 16 ist ausgebildet, den Mähdrescher 10 in Abhängigkeit von dem erkannten Tierkadaver 20 anzusteuern. Die Steuereinheit 16 ist ausgebildet, bei Erkennen des Tierkadavers 18 mittels der Gassensorelemente 32, 34, 36, 38, 40, 42, 50, 64 der Erkennungseinheit 14 die Förderung des Getreides 22 mittels der Fördereinheiten 24, 26, 28, 30, 32, 34 zu unterbrechen. Alternativ kann eine Förderrichtung des Schrägförderers 26 umgekehrt werden, um das mit dem Tierkadaver 18 kontaminierte Getreide 22 von dem Mähdrescher 10 zu entfernen. Weiterhin ist die Steuereinheit 16 ausgebildet, mittels eines nicht dargestellten Anzeigeelements wie beispielsweise einem Display des Mähdreschers 10 einem Bediener des Mähdreschers 10 eine Information über das Erkennen des Tierkadavers 18, über die ermittelte räumliche Position des Tierkadavers 18 und eine mögliche Ausweichroute um den Tierkadaver 18 herum anzuzeigen. Alternativ kann der Bediener des Mähdreschers 10 auch akustisch oder haptisch vor dem Tierkadaver 18 gewarnt werden.

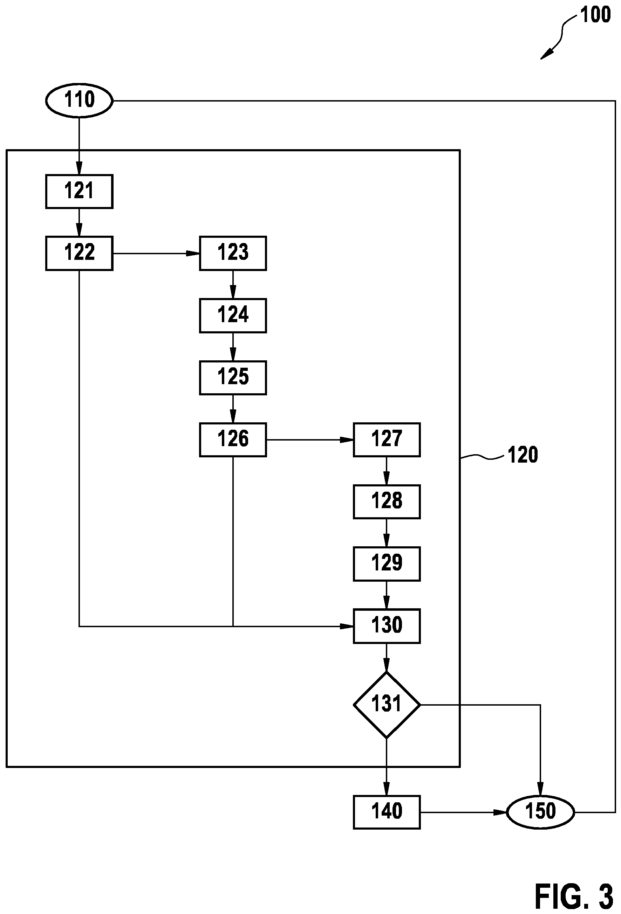

Fig. 3 zeigt ein Ablaufdiagramm eines Verfahrens 100 zur Ansteuerung eines mobilen Fördersystems 10 zur Förderung von landwirtschaftlichem Gut 22.

In Schritt 110 beginnt das Verfahren 100.

In Schritt 120 wird mittels der Erkennungseinheit 14 das Gefahrenobjekt 18 anhand des von dem Gefahrenobjekt 18 abgegebenen Gases 20 erkannt.

In Schritt 121 wird mittels eines ersten Gassensorelements 50 der Erkennungseinheit 14 das Gas 20 detektiert.

In Schritt 122 werden mittels des ersten Gassensorelements 50 eine Konzentration und eine chemische Zusammensetzung des Gases 20 ermittelt.

In Schritt 123 wird mittels eines zweiten Gassensorelements 58 der Erkennungseinheit 14 ein Hintergrundgas 64 detektiert.

In Schritt 124 werden mittels des zweiten Gassensorelements 58 eine Konzentration und eine chemische Zusammensetzung des Hintergrundgases 64 ermittelt.

In Schritt 125 wird die ermittelte Konzentration des Gases 20 um die ermittelte Konzentration des Hintergrundgases 64 korrigiert. Das heißt, mit anderen Worten, die ermittelte Konzentration des Gases 20 wird mit der ermittelten Konzentration des Hintergrundgases 64 referenziert.

In Schritt 126 wird anhand der ermittelten Konzentration und der chemischen Zusammensetzung des Gases 20 das Gefahrenobjekt 18 erkannt.

In Schritt 127 wird mittels mindestens eines weiteren Gassensorelements 32, 34, 36, 38, 40, 42, 50 der Erkennungseinheit 14 das Gas 20 detektiert.

In Schritt 128 wird mittels des weiteren Gassensorelements 32, 34, 36, 38, 40, 42, 50 die Konzentration und die chemische Zusammensetzung des Gases 20 ermittelt.

In Schritt 129 wird die mittels des weiteren Gassensorelements 32, 34, 36, 38, 40, 42, 50 ermittelte Konzentration des Gases 20 um die ermittelte Konzentration des Hintergrundgases 64 korrigiert.

In Schritt 130 wird anhand der ermittelten Konzentration und der chemischen Zusammensetzung des Gases 20 das Gefahrenobjekt 18 erkannt beziehungsweise die Erkennung des Gefahrenobjekts 18 überprüft.

Die Schritte 123, 124, 125, 126 und die Schritte 127, 128, 129, 130 sind optional.

In Schritt 131 wird bestimmt, ob ein Gefahrenobjekt 18 erkannt wurde oder nicht.

Wird kein Gefahrenobjekt 18 erkannt, endet das Verfahren unmittelbar in Schritt 150. Wird ein Gefahrenobjekt 18 erkannt, wird in Schritt 140 mittels der Steuereinheit 16 das Fördersystem 10 angesteuert. Das Fördersystem 10 wird mittels der Steuereinheit 16 derart angesteuert, dass das Fördersystem 10 die Förderung des landwirtschaftlichen Gutes 22 unterbricht. Anschließend endet das Verfahren in Schritt 150. Das Verfahren beginnt von Neuem in Schritt 110.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Mobiles Fördersystem (10) zur Förderung von landwirtschaftlichem Gut (22) mit einer Erkennungseinheit (12), wobei die Erkennungseinheit (12) ausgebildet ist, ein Gefahrenobjekt (18) zu erkennen, um eine Kontamination des geförderten landwirtschaftlichen Gutes (22) mit dem Gefahrenobjekt (18) zu verhindern, **dadurch gekennzeichnet, dass** die Erkennungseinheit (12) ausgebildet ist, das Gefahrenobjekt (18) anhand eines von dem Gefahrenobjekt (18) abgegebenen Gases (20) zu erkennen.

2. Fördersystem (10) nach Anspruch 1, **dadurch gekennzeichnet, dass** die Erkennungseinheit (12) ausgebildet ist, eine Konzentration und/oder eine chemische Zusammensetzung des von dem Gefahrenobjekt (18) abgegebenen Gases (20) zu erkennen, um das Gefahrenobjekt (18) zu identifizieren.

3. Fördersystem (10) nach Anspruch 1 oder 2, **dadurch gekennzeichnet, dass** die Erkennungseinheit (12) mindestens ein Gassensorelement (32; 34; 36; 38; 40; 42; 50; 58; 62) aufweist, um das Gefahrenobjekt (18) zu erkennen.

4. Fördersystem (10) nach einem der vorhergehenden Ansprüche, **dadurch gekennzeichnet, dass** die Erkennungseinheit (12) mindestens ein weiteres dem Gassensorelement (32; 34; 36; 38; 40; 42; 50; 58; 62) räumlich beabstandeten Gassensorelement (32; 34; 36; 38; 40; 42; 50; 58; 62) aufweist, um das von dem Gefahrenobjekt (18) abgegebene Gas (20) an zwei räumlich verschiedenen Positionen zu erfassen.

5. Fördersystem (10) nach Anspruch 4, **dadurch gekennzeichnet, dass** mittels des weiteren Gassensorelements (32; 34; 36; 38; 40; 42; 50; 58; 62) ein Referenzwert eines Hintergrundgases (64) messbar ist.

6. Fördersystem (10) nach einem der vorhergehenden Ansprüche, **gekennzeichnet durch** ein Strömungselement (52), mittels dessen ein von der Erkennungseinheit (12) erfassbarer Volumenstrom des von dem Gefahrenobjekt (18) abgegebenen Gases (20) erhöht wird.

7. Fördersystem (10) nach einem der vorhergehenden Ansprüche, **gekennzeichnet durch** ein zusätzliches optisches Sensorelement, um das Gefahrenobjekt (18) zu erkennen.

8. Fördersystem (10) nach einem der vorhergehenden Ansprüche, **gekennzeichnet durch** eine Steuereinheit, die ausgebildet ist, das Fördersystem (10) in Abhängigkeit von dem erkannten Gefahrenobjekt (18) anzusteuern.

9. Fördersystem (10) nach einem der vorhergehenden Ansprüche, **dadurch gekennzeichnet, dass** das Gefahrenobjekt (18) zumindest ein Teil eines Kadavers (18) und/oder eines Exkrements (18) ist.

10. Fördersystem (10) nach einem der vorhergehenden Ansprüche, **dadurch gekennzeichnet, dass** es sich bei dem Gas (20) um ein bei einer Verwesung und/oder einer Fäulnis und/oder einer Verdauung entstehendes Gas (20) handelt.

11. Verfahren (100) zur Ansteuerung eines mobilen Fördersystems (10) zur Förderung von landwirtschaftlichem Gut (22) mit folgenden Schritten:
- Erkennen (120) eines Gefahrenobjekts;
- Ansteuern (140) des Fördersystems in Abhängigkeit von dem erkannten Gefahrenobjekt (18), um eine Kontamination des geförderten landwirtschaftlichen Gutes (22) mit dem Gefahrenobjekt (18) zu verhindern;
- **dadurch gekennzeichnet, dass** das Gefahrenobjekt anhand eines von dem Gefahrenobjekt (18) abgegebenen Gases (20) erkannt wird.

12. Computerprogramm, umfassend Befehle, die bei der Ausführung des Programms durch einen Computer diesen veranlassen, das Verfahren (100) nach Anspruch 11 auszuführen.

13. Maschinenlesbares Speichermedium, auf dem das Computerprogramm nach Anspruch 12 gespeichert ist.

## Claims

1. Mobile conveyor system (10) for conveying agricultural produce (22) with a detection unit (12), wherein the detection unit (12) is designed to detect a hazardous object (18), in order to prevent the conveyed agricultural produce (22) from being contaminated with the hazardous object (18), **characterized in that** the detection unit (12) is designed to detect the hazardous object (18) on the basis of a gas (20) which is output by the hazardous object (18).

2. Conveyor system (10) according to Claim 1,
**characterized in that** the detection unit (12) is designed to detect the concentration and/or chemical composition of the gas (20) which is output by the hazardous object (18), in order to identify the hazardous object (18).

3. Conveyor system (10) according to Claim 1 or 2,
**characterized in that** the detection unit (12) has at least one gas sensor element (32; 34; 36; 38; 40; 42; 50; 58; 62) in order to detect the hazardous object (18).

4. Conveyor system (10) according to one of the preceding claims, **characterized in that** the detection unit (12) has at least one further gas sensor element (32; 34; 36; 38; 40; 42; 50; 58; 62), which is spatially separated from the gas sensor element (32; 34; 36; 38; 40; 42; 50; 58; 62), in order to sense the gas (20), output by the hazardous object (18), at two spatially different positions.

5. Conveyor system (10) according to Claim 4,
**characterized in that** a reference value of a background gas (64) can be measured by means of the further gas sensor element (32; 34; 36; 38; 40; 42; 50; 58; 62).

6. Conveyor system (10) according to one of the preceding claims, **characterized by** a flow element (52) by means of which a volume flow, which can be sensed by the detection unit (12), of the gas (20) which is output by the hazardous object (18) is increased.

7. Conveyor system (10) according to one of the preceding claims,
**characterized by** an additional optical sensor element in order to detect the hazardous object (18).

8. Conveyor system (10) according to one of the preceding claims,
**characterized by** a control unit which is designed to actuate the conveyor system (10) in accordance with the detected hazardous object (18).

9. Conveyor system (10) according to one of the preceding claims, **characterized in that** the hazardous object (18) is at least part of a carcass (18) and/or is excrement (18).

10. Conveyor system (10) according to one of the preceding claims, **characterized in that** the gas (20) is a gas (20) which is produced during decomposition and/or putrefaction and/or digestion.

11. Method (100) for actuating a mobile conveyor system (10) for conveying agricultural produce (22) comprising the following steps:
- detecting (120) a hazardous object;
- actuating (140) the conveyor system as a function of the detected hazardous object (18), in order to prevent contamination of the conveyed agricultural produce (22) with the hazardous object (18);
- **characterized in that** the hazardous object is detected on the basis of a gas (20) which is output by the hazardous object (18).

12. Computer program comprising instructions which, when the program is run by a computer cause the computer to execute the method (100) according to Claim 11.

13. Machine-readable storage medium in which the computer program according to Claim 12 is stored.

## Revendications

1. Système de transport mobile (10) permettant de transporter des produits agricoles (22), comprenant une unité de reconnaissance (12), l'unité de reconnaissance (12) étant réalisée pour reconnaître un objet à risque (18) afin d'empêcher une contamination des produits agricoles (22) transportés par l'objet à risque (18), **caractérisé en ce que** l'unité de reconnaissance (12) est réalisée pour reconnaître l'objet à risque (18) à l'aide d'un gaz (20) émanant de l'objet à risque (18).

2. Système de transport (10) selon la revendication 1, **caractérisé en ce que** l'unité de reconnaissance (12) est réalisée pour détecter une concentration et/ou une composition chimique du gaz (20) émanant de l'objet à risque (18) afin d'identifier l'objet à risque (18).

3. Système de transport (10) selon la revendication 1 ou 2, **caractérisé en ce que** l'unité de reconnaissance (12) présente au moins un élément de capteur de gaz (32 ; 34 ; 36 ; 38 ; 40 ; 42 ; 50 ; 58 ; 62) pour reconnaître l'objet à risque (18).

4. Système de transport (10) selon l'une quelconque des revendications précédentes, **caractérisé en ce que** l'unité de reconnaissance (12) présente au moins un autre élément de capteur de gaz (32 ; 34 ; 36 ; 38 ; 40 ; 42 ; 50 ; 58 ; 62) spatialement distant de l'élément de capteur de gaz (32 ; 34 ; 36 ; 38 ; 40 ; 42 ; 50 ; 58 ; 62) afin de détecter le gaz (20) émanant de l'objet à risque (18) dans deux positions différentes dans l'espace.

5. Système de transport (10) selon la revendication 4, **caractérisé en ce que** l'autre élément de capteur de gaz (32 ; 34 ; 36 ; 38 ; 40 ; 42 ; 50 ; 58 ; 62) permet de mesurer une valeur de référence d'un gaz de fond (64) .

6. Système de transport (10) selon l'une quelconque des revendications précédentes, **caractérisé par** un élément d'écoulement (52) au moyen duquel un débit volumique, pouvant être détecté par l'unité de reconnaissance (12), du gaz (20) émanant de l'objet à risque (18) est augmenté.

7. Système de transport (10) selon l'une quelconque des revendications précédentes, **caractérisé par** un élément de capteur optique supplémentaire pour reconnaître l'objet à risque (18).

8. Système de transport (10) selon l'une quelconque des revendications précédentes, **caractérisé par** une unité de commande qui est réalisée pour piloter le système de transport (10) en fonction de l'objet à risque reconnu (18).

9. Système de transport (10) selon l'une quelconque des revendications précédentes, **caractérisé en ce que** l'objet à risque (18) est au moins une partie d'un cadavre (18) et/ou d'une déjection (18).

10. Système de transport (10) selon l'une quelconque des revendications précédentes, **caractérisé en ce que** le gaz (20) est un gaz (20) produit en cas de décomposition et/ou de pourriture et/ou de digestion.

11. Procédé (100) de pilotage d'un système de transport (10) mobile permettant de transporter des produits agricoles (22), comprenant les étapes suivantes consistant à :
- reconnaître (120) un objet à risque ;
- piloter (140) le système de transport en fonction de l'objet à risque (18) reconnu afin d'empêcher une contamination des produits agricoles transportés (22) par l'objet à risque (18) ;
- **caractérisé en ce que** l'objet à risque est reconnu à l'aide d'un gaz (20) émanant de l'objet à risque (18) .

12. Programme informatique, comprenant des instructions qui, lorsque le programme est exécuté par un ordinateur, font que celui-ci exécute le procédé (100) selon la revendication 11.

13. Support de stockage lisible par machine, sur lequel est stocké le programme informatique selon la revendication 12.
